# FASCICULE DE BREVET EUROPEEN

(11) **EP 3 740 514 B1**
(45) Date de publication et mention de la délivrance du brevet: **13.09.2023**
(21) Numéro de dépôt: 19719550.6
(22) Date de dépôt: 26.03.2019
(51) Int. Cl.: C08F 220/54, C08F 2/10, C08F 2/48, C08K 3/16, C08K 5/10, C08K 5/16, C08L 33/24, C08K 5/00

(54) **UTILISATION DE SOLUTIONS SPÉCIFIQUES ET MATERIAUX POLYMÉRIQUES OBTENUS À PARTIR DE CES SOLUTIONS POUR LE PIÉGEAGE D'AGENTS TOXIQUES CHIMIQUES**
VERWENDUNG SPEZIELLER LÖSUNGEN UND AUS DIESEN LÖSUNGEN ERHALTENE POLYMERMATERIALIEN ZUM EINFANGEN GIFTIGER CHEMIKALIEN
USE OF SPECIFIC SOLUTIONS AND POLYMERIC MATERIALS OBTAINED FROM THESE SOLUTIONS FOR THE TRAPPING OF TOXIC CHEMICAL AGENTS

(30) Priorité: 27.03.2018 FR 1852653
(43) Date de publication de la demande: 25.11.2020
(73) Titulaire: Commissariat à l'énergie atomique et aux énergies alternatives, 75015 Paris (FR)
(72) Inventeur: CADRA, Stéphane, 37550 SAINT-AVERTIN (FR); BLONDEL, Benoit, 37170 CHAMBRAY-LES-TOURS (FR)
(74) Mandataire: Brevalex
(86) Numéro de dépôt international: PCT/FR2019/050686
(87) Numéro de publication internationale: WO 2019/186054

(56) Documents cités:
- WO-A1-2014/127470
- WO-A1-2017/129688
- MANOS GKIKAS ET AL: "Hydrogels That Actuate Selectively in Response to Organophosphates", ADVANCED FUNCTIONAL MATERIALS, vol. 27, no. 6, 6 septembre 2016 (2016-09-06), page 1602784, XP055528043, DE ISSN: 1616-301X, DOI: 10.1002/adfm.201602784
- YAIR SIMO ET AL: "Organophosphate Degrading Microorganisms and Enzymes as Biocatalysts in Environmental and Personal Decontamination Applications", CRC CRITICAL REVIEWS IN BIOTECHNOLOGY, CRC PRESS, BOCA RATON, FL, US, vol. 28, no. 4, 16 décembre 2008 (2008-12-16), pages 265-275, XP009181236, ISSN: 0738-8551, DOI: 10.1080/07388550802455742
- CASTELLANI ROMAIN ET AL: "Efficiency enhancement of decontamination gels by a superabsorbent polymer", COLLOIDS AND SURFACES A: PHYSIOCHEMICAL AND ENGINEERING ASPECTS, vol. 454, 20 janvier 2014 (2014-01-20), pages 89-95, XP029032564, ISSN: 0927-7757, DOI: 10.1016/J.COLSURFA.2014.04.022

## Description

### DOMAINE TECHNIQUE

La présente invention a trait à l'utilisation de solutions spécifiques ou de matériaux polymériques spécifiques obtenus à partir de ces solutions pour le piégeage d'agents toxiques chimiques, tels que des composés chimiques organophosphorés.

Du fait de leurs propriétés de piégeage vis-à-vis d'agents toxiques, tels que les composés organophosphorés, ces solutions ou matériaux polymériques peuvent trouver application dans la décontamination de milieux comprenant des composés chimiques organosphosphorés, par exemple, dans certains environnements, comme l'industrie chimique, l'agriculture ou encore dans des secteurs de lutte contre les attaques au gaz chimique.

De manière générale, les composés organophosphorés présents dans ces environnements se présentent sous la forme de composés organiques présentant une toxicité avérée pour l'organisme humain, la concentration moyenne létale par inhalation pouvant être d'au moins 10 mg.min.m⁻³, comme décrit dans J.Org.Chem.1996, 61, 8407-8413*.* En effet, ces composés peuvent être impliqués dans le mécanisme d'inhibition de l'acétylcholinestérase empêchant le relâchement musculaire et pouvant ainsi provoquer la mort par asphyxie.

Ces composés peuvent être compris dans la formulation d'insecticides, de pesticides ou encore d'agents chimiques de combat et se présentent classiquement sous forme de composés organiques huileux hydrosolubles qui, une fois dispersés dans l'environnement, présentent une durée de demi-vie dans l'eau pouvant aller de 5 heures à 80 heures, avec toutefois le risque que les produits de dégradation par hydrolyse dans l'eau restent toxiques pendant une durée de 30 à 60 jours.

Au vu de leur toxicité, de nombreuses recherches ont été entreprises pour mettre au point des solutions curatives aux menaces liées aux composés organophosphorés, un des axes de ces recherches visant à trouver des systèmes pour catalyser le processus de dégradation de ces composés, afin de les rendre rapidement inactifs.

Ces systèmes décontaminants se présentent généralement sous forme de liquides ou de poudres sous forme de sprays ou encore sous forme d'un liquide imbibant une éponge, les principes actifs à l'origine de la décontamination pouvant être d'origine inorganique ou organique.

A titre d'exemples de principes actifs inorganiques, on peut citer les solutions alcalines, telles que des solutions de soude (NaOH), des solutions de potasse (KOH), des solutions d'hydroxyde d'ammonium (NH₄OH), qui ont été les premières solutions décontaminantes à être étudiées à la fin des années 50, en raison de leur efficacité vis-à-vis des composés organosphophorés de combat, tels que le gaz Sarin ou le gaz Soman, qui entrent dans la catégorie des neurotoxiques de type G, de tels systèmes étant décrits dans Act.Chem.Scand. 1957, 11, 1131-1142.

Du point de vue du mécanisme d'action de ces solutions alcalines à l'égard des composés organophosphorés, il a été démontré qu'elles permettent d'accroître les cinétiques d'hydrolyse des gaz Sarin et Soman en augmentant la valeur de pH du milieu, la durée de demi-vie étant réduite à 8 minutes en milieu basique. En revanche, l'utilisation de solutions alcalines s'avère inefficace vis-à-vis de composés organophosphorés plus persistants, tels que les agents neurotoxiques de type V (et plus spécifiquement les agents VX et VR-55).

Pour ces agents neurotoxiques de type V, de nouvelles solutions ont été proposées, comme cela est décrit dans J.Org.Chem. 2009, 74, 329-338, où, pour améliorer l'hydrolyse de ces agents, il est proposé de les adsorber sur un mélange pulvérulent composé de fluorure de potassium (KF) et d'alumine (Al₂O₃), ce mélange permettant, en présence d'eau, de générer de la potasse (KOH), ce qui induit une augmentation du pH du milieu.

A titre d'exemples de principes actifs organiques, il a été proposé d'utiliser des composés organiques α-nucléophiles, c'est-à-dire un composé comprenant un groupe nucléophile adjacent à un atome porteur d'un doublet électronique, lequel doublet a pour effet de renforcer le caractère nucléophile du composé. Des composés répondant à cette définition et efficaces pour la décontamination d'un milieu comprenant des composés organophosphorés tels que des agents de type G ou V, sont les composés oximates, comme la 2,3-butanedione monoxime.

Comme alternative, il a été également proposé d'intégrer ces fonctions oximates directement dans un polymère, par exemple, en partant d'un polymère de base du type polyacrylonitrile. Les groupes amidoximates ainsi générés ont un caractère nucléophile élevé avec un pKa de l'ordre de 11 à 12 (contre 8, pour des oximes classiques), comme décrit dans Ind.Eng.Chem.Res. 2009, 48, 1650-1659, les polymères résultant présentant une efficacité élevée en dispersion dans l'eau avec des durées de demi-vie respectives de 5 minutes et inférieures à 3 minutes pour le gaz VX et le gaz sarin. WO2017129688 A1 concerne l'utilisation de matériaux hydrogels pour la séquestration de composés chimiques organophosphorés.

Aussi, au vu de ce qui existe, les inventeurs se sont proposé de mettre au point de nouveaux systèmes utilisables pour la décontamination en agents toxiques chimiques et, plus particulièrement, en composés organophosphorés et qui, outre leur efficacité, soient d'utilisation simple et adaptés à tous types de substrats sur lesquels les agents toxiques chimiques peuvent se trouver.

### EXPOSÉ DE L'INVENTION

Ainsi, l'invention a trait à l'utilisation :
- d'une solution comprenant au moins un solvant protique, au moins un monomère comprenant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photopolymérisation et au moins un agent choisi parmi les halogénures alcalins, les phosphates alcalins, les sulfates alcalins et les mélanges de ceux-ci ; ou
- d'un matériau polymérique susceptible d'être obtenu par polymérisation de la solution définie ci-dessus, ledit matériau comprenant un polymère issu de la polymérisation du ou des monomères et du ou des agents de réticulation tels que définis ci-dessus et piégeant, en son sein, une phase liquide comprenant au moins un agent tel que défini ci-dessus (à savoir au moins un agent choisi parmi les halogénures alcalins, les phosphates alcalins, les sulfates alcalins et les mélanges de ceux-ci) ;
pour le piégeage d'au moins un agent toxique chimique.

Par solution, on précise qu'il s'agit d'un mélange liquide homogène des ingrédients susmentionnés, ce qui signifie que ceux-ci sont tous utilisés de sorte à être solubles dans le solvant protique de la solution.

Par solvant protique, on précise que l'on entend un solvant polaire présentant au moins un atome d'hydrogène susceptible d'intervenir dans la formation de liaisons hydrogène, un exemple de solvant pratique particulièrement avantageux pour l'invention étant l'eau, auquel cas les solutions de l'invention peuvent être qualifiées de solutions aqueuses. Le solvant protique, tel que l'eau, peut être présent dans la solution à hauteur de 40 à 60% en volume par rapport au volume total de la solution.

Par groupe (alkyl)acrylique, groupe (alkyl)acrylate ou groupe (alkyl)acrylamide, on précise que l'on entend respectivement :
- pour le groupe (alkyl)acrylique, un groupe acrylique ou un groupe alkylacrylique (ce qui signifie qu'un groupe alkyle est présent sur le carbone porteur de la double liaison et du groupe -CO-) ;
- pour le groupe (alkyl)acrylate, un groupe acrylate ou un groupe alkylacrylate (ce qui signifie qu'un groupe alkyle est présent sur le carbone porteur de la double liaison et du groupe -CO-) ; et
- pour le groupe (alkyl)acrylamide, un groupe acrylamide ou un groupe alkylacrylamide (ce qui signifie qu'un groupe alkyle est présent sur le carbone porteur de la double liaison et du groupe -CO-).

Un exemple de groupe (alkyl)acrylique, groupe (alkyl)acrylate ou groupe (alkyl)acrylamide est respectivement un groupe (méth)acrylique, un groupe (méth)acrylate ou un groupe (méth)acrylamide.

Comme mentionné ci-dessus, les solutions de l'invention comprennent au moins un monomère comprenant un groupe (alkyl)acrylique, un groupe (alkyl)acrylate ou un groupe (alkyl)acrylamide, un tel monomère pouvant répondre à la formule (I) suivante : 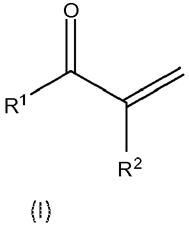 dans laquelle :
- R¹ représente -OR' avec R' représentant un atome d'hydrogène ou un élément alcalin (comme le sodium ou le potassium) ; -OR³ avec R³ représentant un groupe alkyle, de préférence, comprenant de 1 à 4 atomes de carbone (tel qu'un groupe méthyle, un groupe éthyle) ; ou -NR⁴R⁵ avec R⁴ et R⁵ représentant, indépendamment l'un de l'autre, un atome d'hydrogène ou un groupe alkyle, de préférence, comprenant de 1 à 4 atomes de carbone (tel qu'un groupe méthyle, un groupe éthyle) ;
- R² représente un atome d'hydrogène ou un groupe alkyle, de préférence, comprenant de 1 à 4 atomes de carbone (tel qu'un groupe méthyle, un groupe éthyle).

Avantageusement, le ou les monomères de l'invention comprennent un groupe (alkyl)acrylamide, tels que ceux répondant à la formule (II) suivante : 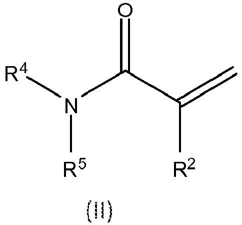 dans laquelle :
- R⁴ et R⁵ sont tels que définis ci-dessus ;
- R² est tel que défini ci-dessus.

En particulier, il peut s'agir d'un monomère de formule (II), dans lequel R² est un atome d'hydrogène et R⁴ et R⁵ représentent un groupe méthyle, un tel monomère correspondant au N,N'-diméthylacrylamide.

Le ou les monomères peuvent être présents dans la solution à hauteur de 40 à 60% en volume par rapport au volume total de la solution. A titre d'exemple, lorsque le monomère est le N,N'-diméthylacrylamide, il peut être présent à hauteur de 47,8% en volume par rapport au volume total de la solution.

Les solutions de l'invention comprennent également au moins un agent de réticulation comprenant au moins deux groupes choisis parmi les groupes (alkyl)acryliques, (alkyl)acrylates, (alkyl)acrylamides, ce qui signifie en d'autres termes qu'il s'agit d'un composé comprenant, par exemple :
- au moins deux groupes (alkyl)acryliques ;
- au moins deux groupes (alkyl)acrylates ;
- au moins deux groupes (alkyl)acrylamides ;
- au moins un groupe (alkyl)acrylique et au moins un groupe (alkyl)acrylate ;
- au moins un groupe (alkyl)acrylique et au moins un groupe (alkyl)acrylamide ; ou
- au moins un groupe (alkyl)acrylate et au moins un groupe (alkyl)acrylamide.

Avantageusement, le ou les agents de réticulation sont des agents comprenant au moins deux groupes (alkyl)acrylates, tels que ceux répondant à la formule (III) suivante : 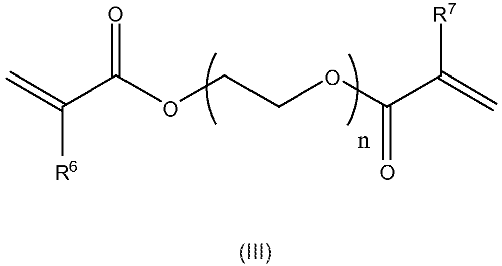 dans laquelle :
- R⁶ et R⁷ représentent, indépendamment l'un de l'autre, un atome d'hydrogène ou un groupe alkyle, par exemple, comprenant de 1 à 4 atomes de carbone (par exemple, un groupe méthyle, un groupe éthyle) ;
- n correspond au nombre d'occurrence du motif pris entre parenthèse, ce nombre allant de 1 à 15,

A titre d'exemple, un agent de réticulation utilisable dans les solutions de l'invention est un agent de formule (III), dans laquelle R⁶ et R⁷ sont des groupes méthyles, cet agent correspondant ainsi à un di méthacrylate de polyéthylèneglycol.

Il est tout à fait envisageable d'utiliser plusieurs agents de réticulation distincts entrant dans le cadre de la définition des agents de formule (III) définie ci-dessus.

Il s'entend également que les agents de réticulation sont distincts des monomères utilisés dans les solutions de l'invention.

En particulier, il peut être utilisé un mélange de diméthacrylate de polyéthylèneglycol de masse molaire moyenne de 750 g/mol, ce qui correspond à un mélange de plusieurs molécules de formule (III) définie ci-dessus, avec un nombre d'occurrence moyen du motif éthylèneglycol de 13,2. Le ou les agents réticulants peuvent être présents dans la solution à hauteur de 1 à 5% en volume par rapport au volume total de la solution.

Lorsqu'il s'agit du mélange de diméthacrylate de polyéthylèneglycol susmentionné, ce mélange peut être présent dans la solution à hauteur de 1,6% en volume par rapport au volume total de la solution.

Enfin, les solutions comprennent au moins un amorceur de photopolymérisation (pouvant également être dénommé photoamorceur), lequel amorceur est un composé capable de générer des radicaux libres, lorsqu'il est soumis à un rayonnement approprié (par exemple, un rayonnement UV compris entre 350 et 420 nm). Les radicaux ainsi formés vont ainsi réagir avec les sites réactifs des composés présents dans la solution (ici, les fonctions polymérisables des monomères et des agents de réticulation) entraînant ainsi la polymérisation de ces composés. Ce ou ces amorceurs sont, avantageusement, solubilisés par au moins un des ingrédients constitutifs de la solution (par exemple, le solvant protique).

Le ou les amorceurs de photopolymérisation susceptibles d'être utilisés dans les solutions de l'invention peuvent être des amorceurs de la famille des cétones aromatiques, tels que le 1-hydroxy-cyclohexylphénylcétone (connu également sous les appellations commerciales IRGACURE^{®} 184 ou CPK^{®}) ou le (phénylphosphoryl)bis(mésitylméthanone) (connu sous l'appellation IRGACURE^{®} 819) ou un mélange de ces deux photoamorceurs.

Le ou les amorceurs de photopolymérisation peuvent être présents dans la solution à hauteur de 1 à 15 g/L. A titre d'exemple, lorsque l'amorceur est l'IRGACURE^{®} 184, il peut être présent à hauteur de 11,5 g/L.

Pour finir, les solutions comprennent au moins un agent choisi parmi les halogénures alcalins, les phosphates alcalins, les sulfates alcalins et les mélanges de ceux-ci.

Les auteurs de l'invention ont constaté que ces agents contribuent à neutraliser les composés organophosphorés et, notamment, des composés organophosphorés de combat de type V, qui sont des composés comprenant un atome de soufre, qui est connecté à un groupe phosphonate, les agents susmentionnés étant aptes à couper les liaisons phosphore-soufre pour en accélérer l'hydrolyse.

En outre, les agents susmentionnés permettent d'augmenter la force ionique des solutions les contenant, ce qui permet, entre autres, d'augmenter le pouvoir séquestrant des composés organophosphorés par pression osmotique.

Le ou les agents peuvent être présents dans la solution à hauteur de 1 à 30 g/L, de préférence de 1 à 15 g/L.

Plus spécifiquement, le ou les agents peuvent être choisis parmi les fluorures alcalins, le ou lesquels fluorures alcalins peuvent être présent(s) dans la solution à hauteur de 1 à 15 g/L.

Un agent particulièrement efficace et utilisable dans les solutions de l'invention est le fluorure de potassium, lequel peut être, par exemple, présent dans la solution à hauteur de 11,5 g/L.

A titre d'exemple, les solutions de l'invention peuvent être composées exclusivement d'au moins un solvant protique, d'au moins un monomère comportant un groupe (alkyl)acrylique, (alkyl)acrylate ou (alkyl)acrylamide, d'au moins un agent de réticulation comprenant au moins deux groupes choisis parmi les groupes (alkyl)acrylique, (alkyl)acrylate ou (alkyl)acrylamide, d'au moins un amorceur de photopolymérisation et d'au moins un agent choisi parmi les halogénures alcalins, les phosphates alcalins, les sulfates alcalins et les mélanges de ceux-ci.

Une solution conforme à l'invention est une solution comprenant ou constituée exclusivement des ingrédients suivants :
- comme solvant protique, de l'eau ;
- comme monomère, du N,N'-diméthylacrylamide ;
- comme agent de réticulation, un diméthacrylate de polyéthylèneglycol ou un mélange de ceux-ci ;
- comme amorceur de photopolymérisation, du 1-hydroxy-cyclohexylphénylcétone (connu également sous l'appellation commerciale IRGACURE^{®} 184) ;
- comme agent, du fluorure de potassium.

Les solutions de l'invention constituent des formulations liquides applicables sur une large gamme d'objets contaminés par des composés organophosphorés du fait de la bonne compatibilité de ces solutions vis-à-vis d'une large gamme de surfaces (telle qu'une surface métallique comme une surface en aluminium, une surface recouverte d'une couche de peinture, une surface émaillée ou une surface en matériau plastique).

On précise que, par bonne compatibilité, on entend qu'aucune dégradation (telle qu'un phénomène de corrosion, de coloration, de gonflement, d'écaillage ou d'altération perceptible à l'œil nu) n'est visible après 1 heure de mise en contact avec les solutions de l'invention.

Une fois appliquées sur une telle surface, par exemple, par enduction, injection ou pulvérisation, les solutions de l'invention, de par leurs propriétés intrinsèques liées à la nature des ingrédients susmentionnés, vont pouvoir intégrer, par diffusion naturelle et miscibilité naturelle, les agents toxiques chimiques, tels que les composés organophosphorés initialement présents sur la surface. Les solutions ayant capté ces agents toxiques peuvent être ensuite gélifiés sous l'influence d'un rayonnement naturel ou artificiel (ce qui implique l'application d'un rayonnement autre que le rayonnement de la lumière naturelle). Plus spécifiquement, sous l'effet du rayonnement adéquat, le ou les amorceurs de photopolymérisation sont activés et engendre l'initiation de polymérisation du ou des monomères et du ou des agents de réticulation de la solution. A l'issue de la polymérisation, il est en résulte ainsi un figement de la solution sous forme d'un matériau polymère, qui se présente sous forme d'un gel cohésif (pouvant être qualifié d'hydrogel, lorsque le solvant protique est de l'eau), dans lequel les agents toxiques sont physiquement piégés dans la solution subsistante, laquelle est elle-même intégralement piégée dans le réseau polymérique du gel. Ce gel cohésif constitue une membrane de confinement, intègre et manipulable, qui peut être ensuite retirée mécaniquement, par exemple, par simple pelage de la surface de substrat, laissant ainsi un substrat décontaminé. De ce fait, les agents toxiques ainsi piégés sont évacués de la surface contaminée sans nécessiter l'usage de dispositifs particuliers de rinçage, récupération ou traitement d'effluents. Le matériau polymérique constitue un matériau de confinement des agents toxiques chimiques présents initialement sur la surface à décontaminer.

Il est à noter également que, du fait de la réactivité de la solution vis-à-vis des composés organophosphorés, les composés organophosphorés piégés dans le gel peuvent être naturellement dégradés *in situ.*

Comme mentionné ci-dessus, pour piéger au moins un agent toxique chimique, il peut être utilisé également un matériau polymérique susceptible d'être obtenu par polymérisation d'une solution telle que définie ci-dessus, ledit matériau comprenant un polymère issu de la polymérisation du ou des monomères et du ou des agents de réticulation tels que définis ci-dessus (en d'autres termes, le polymère comprend des motifs répétitifs issus de la polymérisation du ou des monomères et du ou des agents de réticulation) piégeant, en son sein, une phase liquide (par exemple, une phase comprenant un solvant protique, tel que l'eau) comprenant un agent choisi parmi les halogénures alcalins, les phosphates alcalins, les sulfates alcalins et les mélanges de ceux-ci.

Les spécificités relatives aux monomères, agents de réticulation et aux agents choisis parmi les halogénures alcalins, les phosphates alcalins, les sulfates alcalins et les mélanges de ceux-ci définies au sujet des solutions sont également valables pour les matériaux.

Lorsque la phase liquide comprend, comme solvant protique, de l'eau, le matériau polymérique susmentionné peut être qualifié de matériau hydrogel.

Par matériau hydrogel, on précise qu'il s'agit un matériau se présentant sous la forme d'un gel constitué d'un polymère dans lequel est retenue une phase aqueuse, qui correspond classiquement au milieu de polymérisation (c'est-à-dire le milieu dans lequel a eu lieu la polymérisation pour former le polymère constitutif du matériau hydrogel), qui a absorbé, dans notre cas de figure, les composés organophosphorés. De par la flexibilité du réseau polymère constituant l'hydrogel, un tel matériau est capable classiquement d'absorber une masse en eau pouvant dépasser de 100 fois la masse de l'édifice polymère et, dans notre cas de figure, au moins 5 fois la masse de l'édifice polymère.

Par polymère, on entend, classiquement, au sens de l'invention, un composé constitué par l'enchaînement d'un ou plusieurs motifs répétitifs.

Par motif répétitif, on entend, classiquement, au sens de l'invention, un groupe organique bivalent (c'est-à-dire un groupe formant pont) issu d'un monomère après polymérisation de celui-ci, la formule du motif répétitif correspondant à celle du monomère dont la double liaison a été remplacée par deux atomes d'hydrogène portés par les atomes de carbone porteurs de la double liaison dans le monomère.

Le polymère comprend des motifs répétitifs issus de la polymérisation du ou des monomères et du ou des agents de réticulation, ce qui signifie en d'autres termes, que ce polymère est un polymère réticulé, lequel peut comprendre plusieurs chaînes comprenant un ou plusieurs motifs répétitifs issus de la polymérisation du ou des monomères reliées entre elles par un ou plusieurs motifs répétitifs (pouvant être ainsi qualifiés de motifs de réticulation) issus de la polymérisation du ou des agents de réticulation.

A titre d'exemple, le polymère peut comprendre un motif répétitif issu de la polymérisation d'un monomère de formule (I) telle que définie ci-dessus, ce motif répétitif répondant ainsi à la formule (I') suivante : 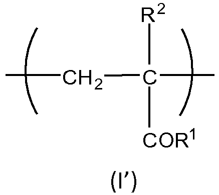
avec R¹ et R² étant tels que définis ci-dessus, et
encore plus spécifiquement, le polymère peut comprendre un motif répétitif issu de la polymérisation d'un monomère de formule (II) telle que définie ci-dessus, ce motif répétitif répondant ainsi à la formule (II') suivante : 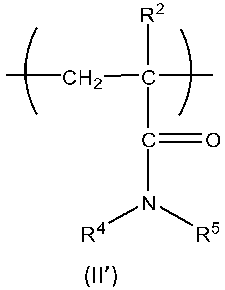
dans laquelle les R², R⁴ et R⁵ sont tels que définis ci-dessus, et plus particulièrement, R² est un atome d'hydrogène et R⁴ et R⁵ représentent un groupe méthyle, auquel cas le motif répétitif répond à la formule (II") suivante : 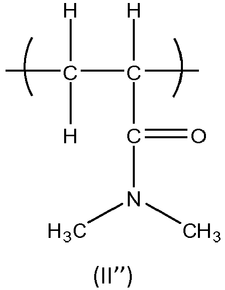
ce motif répétitif étant issu de la polymérisation du monomère N,N'-diméthylacrylamide.

A titre d'exemple, le polymère peut comprendre, en outre, un motif répétitif issu de la polymérisation d'un agent de réticulation de formule (III) telle que définie ci-dessus, ce motif répétitif répondant ainsi à la formule (III') suivante : 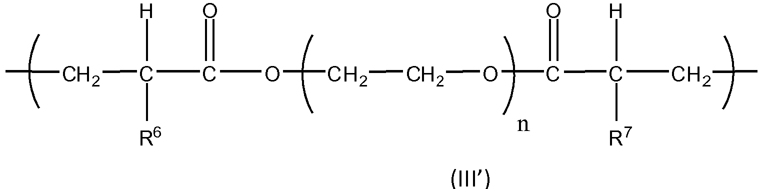 dans laquelle les R⁶, R⁷ et n sont tels que définis ci-dessus et, plus particulièrement, R⁶ et R⁷ sont des groupes méthyles.

En particulier, un polymère susceptible d'entrer avantageusement dans la constitution de l'invention est un polymère réticulé comprenant plusieurs chaînes comprenant un motif répétitif de formule (II) telle que définie ci-dessus (ou plus spécifiquement un motif répétitif de formule (II') ou (II")), lesdites chaînes étant liées entre elles par un motif répétitif de formule (III'), lequel motif répétitif constituant ainsi un motif de réticulation.

D'un point de vue structural, le matériau hydrogel se présente avantageusement, sous forme d'une membrane, par exemple, une membrane plane présentant une épaisseur pouvant aller de 1 mm à 2 cm, la membrane pouvant remplir une fonction de patch.

Comme mentionné ci-dessus, les solutions et les matériaux polymériques de l'invention sont, de par leurs ingrédients, aptes à séquestrer ou piéger des composés organosphorés.

L'invention a également trait à un procédé de piégeage d'un agent toxique chimique, tel qu'un composé organophosphoré, présent sur une surface contaminée par ledit agent toxique chimique, ledit agent pouvant être, par exemple, un composé organophosphoré.

Plus spécifiquement, ce procédé comprend les étapes suivantes :
- une étape de mise en contact d'une solution telle que définie ci-dessus avec la surface contaminée ;
- une étape de formation d'un matériau polymérique tel que défini ci-dessus par polymérisation du ou des monomères et du ou des agents de réticulation présents dans la solution ;
- une étape de retrait du matériau polymérique ainsi formée de ladite surface, moyennant quoi ladite surface est ainsi appauvrie voire dénuée en ledit agent toxique chimique.

L'étape de mise en contact peut être réalisée par enduction de la surface à décontaminer par la solution ou par pulvérisation de la solution sur la surface à décontaminer.

L'étape de formation du matériau polymérique peut être réalisée par application d'un rayonnement pour initier la photopolymérisation grâce à l'action des amorceurs de photopolymérisation.

Ce rayonnement peut appartenir, avantageusement, au domaine des rayonnements ultraviolets, c'est-à-dire des rayonnements présentant au moins une longueur d'onde du domaine des ultraviolets, soit une longueur d'onde comprise entre 350 nm et 420 nm.

L'intensité du rayonnement peut être comprise entre 1000 et 10 000 W/m².

L'origine du rayonnement peut être naturelle (par exemple, l'exposition à la lumière naturelle du soleil) ou artificielle, telle que, par exemple, le rayonnement issu d'une lampe UV. A titre d'exemple, une source lumineuse artificielle utilisable dans le cadre de l'invention peut être une lampe UV émettant une longueur d'onde de 405 nm avec une puissance de 9000 W/m².

Des solutions utilisables dans le cadre de l'utilisation et du procédé de piégeage conformes à l'invention sont également nouveaux et font l'objet de l'invention, à savoir :
- une solution utilisable pour le piégeage d'au moins un agent toxique chimique, ladite solution comprenant au moins un solvant protique, au moins un monomère comprenant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photopolymérisation et au moins un agent choisi parmi les halogénures alcalins à l'exclusion du chlorure de sodium, les phosphates alcalins, les sulfates alcalins et les mélanges de ceux-ci ;
- un matériau polymérique susceptible d'être obtenu par polymérisation d'une solution telle que définie ci-dessus au sujet de l'utilisation et du procédé de piégeage, le matériau comprenant un polymère issu de la polymérisation du ou des monomères et du ou des agents de réticulation tels que définis ci-dessus et piégeant, en son sein, une phase liquide comprenant au moins un agent tel que défini ci-dessus (à savoir au moins un agent choisi parmi les halogénures alcalins, les phosphates alcalins, les sulfates alcalins et les mélanges de ceux-ci.

Les spécificités relatives aux solutions et aux matériaux définis dans le cadre de la description de l'utilisation objet de l'invention et du procédé de piégeage objet de l'invention sont également valables pour les solutions en tant que tels et objets de l'invention.

L'invention va être, à présent, décrite à la lumière des exemples ci-dessous, ces exemples n'étant fournis qu'à titre d'illustration de l'invention et n'en constituant en aucun cas une limitation.

### EXPOSÉ DÉTAILLÉ DE MODES DE RÉALISATION PARTICULIERS

### EXEMPLE 1

Cet exemple illustre la préparation d'une solution conforme à l'invention.

Dans un pilulier de 30 mL, préalablement séché en étuve une nuit à 90°C sous vide dynamique et conditionné sous argon sont introduits, successivement, 10,4 mL de N,N'-diméthylacrylamide, 11,0 mL d'eau distillée, 0,35 mL de poly(éthylèneglycol)diméthacrylate de masse molaire moyenne de 750 g/mol, 0,25 g d'IRGACURE^{®} 184 et 0,25 g de fluorure de potassium.

Un barreau aimanté est introduit dans le milieu résultant. Le milieu est ensuite purgé à l'argon et mis sous agitation magnétique jusqu'à dissolution complète des composés solides, tels que l'IRGACURE^{®} 184 et le fluorure de potassium.

La solution résultante est stockée sous argon jusqu'à son utilisation.

### EXEMPLE 2

Cet exemple vise à évaluer l'action décontaminante de la solution préparée à l'exemple 1 sur un support contaminée.

Pour ce faire, dans une plaque en aluminium brut sont découpés deux échantillons plans de dimensions 2,5 cm*2,5 cm.

Sur chacun des deux échantillons sont déposés 10 µL d'un simulant : le méthylphosphonate de méthyle (symbolisé par l'abréviation DMMP).

On précise que, par simulant, on entend un composé présentant des propriétés physico-chimiques similaires aux composés organophosphorés de combat (en termes notamment de solubilité et de température d'ébullition) tout en étant faiblement nocif vis-à-vis de l'organisme humain.

Afin de s'approcher davantage des conditions opératoires réelles, un temps d'attente de 10 minutes est respecté afin de permettre au simulant de pénétrer dans les pores des échantillons.

A l'issue de ce temps d'attente, le premier échantillon est rincé avec 2 x 0,5 mL d'éthanol absolu. Une prise d'essai de la solution de rinçage est effectuée puis celle-ci est analysée par chromatographie en phase gazeuse couplée à de la spectrométrie de masse (GC-MS). L'aire du signal correspondant au DMMP sur le chromatogramme est relevée et constituera la valeur comparative.

Parallèlement, 200 µL de solution de l'invention sont introduits sur la zone contaminée au DMMP du deuxième échantillon. L'échantillon est placé dans un four UV puis est irradié à 405 nm à raison de 9000 Watts/m². A ce niveau de puissance, la gélification complète de la solution de l'invention est atteinte en 4 minutes. La solution prend alors l'aspect d'une membrane souple. L'irradiation est stoppée puis un temps d'attente d'une heure depuis la mise en contact de la solution de l'invention avec le support est respecté.

A l'issue du temps d'attente, la membrane résultante de la polymérisation du composé de l'invention est décollée du support à l'aide d'une pince. Le support est rincé avec 2 x 0,5 mL d'éthanol absolu. Une prise d'essai de la solution de rinçage est effectuée. Celle-ci est analysée par GC-MS, puis l'aire du signal correspondant au DMMP est comparée à la valeur précédemment obtenue.

Lors de cet essai, aucune trace de DMMP n'a été détectée sur le support traité avec la solution de l'invention, ce qui signifie que la quantité de DMMP est inférieure au seuil de détection de l'appareil.

Aucune dégradation visuelle n'est visible sur le matériau support.

### EXEMPLE 3

Cet exemple est similaire à l'Exemple 2, si ce n'est que le matériau de support utilisé est de la tôle peinte (peinture laquée de grade automobile).

Dans ce cas de figure, la gélification complète de la solution de l'invention est atteinte après 9 minutes d'insolation.

Lors de cet essai, aucune trace de DMMP n'a été détectée sur le support traité avec la solution de l'invention, ce qui signifie que la quantité de DMMP est inférieure au seuil de détection de l'appareil.

Aucune dégradation visuelle n'est visible sur le matériau support.

### EXEMPLE 4

Cet exemple est similaire à l'Exemple 2, si ce n'est que le matériau de support utilisé est de la faïence. La solution a été mise en contact avec la face émaillée.

Lors de cet essai, aucune trace de DMMP n'a été détectée sur le support traité avec la solution de l'invention, ce qui signifie que la quantité de DMMP est inférieure au seuil de détection de l'appareil.

Aucune dégradation visuelle n'est visible sur le matériau support.

### EXEMPLE 5

Cet exemple est similaire à l'Exemple 2, si ce n'est que le matériau de support utilisé est un matériau thermoplastique rugueux constitué de 85% de polypropylène, 15% de talc et d'un pigment colorant (< 1%).

Dans ce cas de figure, la gélification complète du la composition est atteinte après 8 minutes d'insolation.

Lors de cet essai, aucune trace de DMMP n'a été détectée sur le support traité avec la solution de l'invention, ce qui signifie que la quantité de DMMP est inférieure au seuil de détection de l'appareil.

Aucune dégradation visuelle n'est visible sur le matériau support.

En résumé, pour tous les essais de décontamination, le pourcentage de DMMP résiduel peut être calculé. Il s'agit du rapport entre les aires du signal GC du DMMP sans et avec traitement par le composé de l'invention.

Les mesures effectuées sont résumées ci-dessous :

| Echantillon | Initial | Après traitement avec l'invention | |
|---|---|---|---|
| | Aire GC* | Aire GC* | % DMMP résiduel** |
| Aluminium | 137 670 887 | 0 | < 0,1 % |
| Faïence | 135 550 976 | 0 | < 0,1 % |
| Tôle peinte | 58 926 974 | 0 | < 0,1 % |
| Thermoplastique | 45 595 837 | 0 | < 0,1 % |

| | | | |
|---|---|---|---|
| * : Aire, en unités arbitraires, du signal du chromatogramme correspondant au DMMP. ** : Valeur considérée non nulle du fait de la limite de détection de l'appareil GCMS. | | | |

Pour l'ensemble des cas étudiés, le traitement des surfaces contaminées avec l'invention permet de réduire les teneurs de contaminants résiduels (DMMP) à des valeurs particulièrement faibles (inférieures à 0,1%). Cela signifie qu'un litre de la solution de l'invention est capable de retirer environ 50 mL d'organophosphoré d'une surface contaminée, ce qui démontre le niveau d'efficacité élevé des solutions de l'invention.

## Revendications

1. Utilisation :
- d'une solution comprenant au moins un solvant protique, au moins un monomère comprenant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photopolymérisation et au moins un agent choisi parmi les halogénures alcalins, les phosphates alcalins, les sulfates alcalins et les mélanges de ceux-ci ; ou
- d'un matériau polymérique susceptible d'être obtenu par polymérisation de la solution définie ci-dessus, ledit matériau comprenant un polymère issu de la polymérisation du ou des monomères et du ou des agents de réticulation tels que définis ci-dessus et piégeant, en son sein, une phase liquide comprenant au moins un agent tel que défini ci-dessus ;
pour le piégeage d'au moins un agent toxique chimique.

2. Utilisation selon la revendication 1, dans laquelle le solvant protique est de l'eau.

3. Utilisation selon la revendication 1 ou 2, dans laquelle le solvant protique est présent à hauteur de 40 à 60% en volume par rapport au volume total de la solution.

4. Utilisation selon l'une quelconque des revendications précédentes, dans laquelle le au moins un monomère comprenant un groupe (alkyl)acrylique, un groupe (alkyl)acrylate ou un groupe (alkyl)acrylamide répond à la formule (I) suivante : 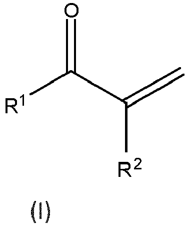 dans laquelle :
- R¹ représente -OR' avec R' représentant un atome d'hydrogène ou un élément alcalin ; -OR³ avec R³ représentant un groupe alkyle ; ou -NR⁴R⁵ avec R⁴ et R⁵ représentant, indépendamment l'un de l'autre, un atome d'hydrogène ou un groupe alkyle ;
- R² représente un atome d'hydrogène ou un groupe alkyle.

5. Utilisation selon l'une quelconque des revendications précédentes, dans laquelle le au moins un monomère est un monomère répondant à la formule (II) suivante : 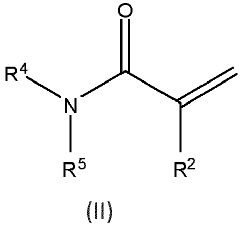 dans laquelle :
- R⁴ et R⁵ sont tels que définis à la revendication 4 ;
- R² est tel que défini à la revendication 4.

6. Utilisation selon l'une quelconque des revendications précédentes, dans laquelle le au moins un agent de réticulation comprend au moins deux groupes (alkyl)acrylates.

7. Utilisation selon l'une quelconque des revendications précédentes, dans laquelle le au moins un agent de réticulation répond à la formule (III) suivante : 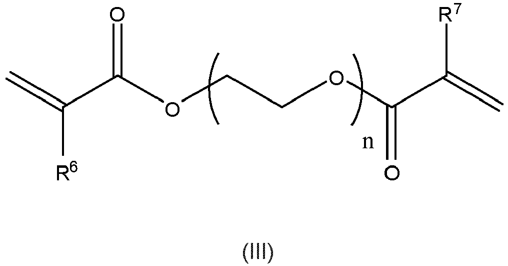 dans laquelle :
- R⁶ et R⁷ représentent, indépendamment l'un de l'autre, un atome d'hydrogène ou un groupe alkyle ;
- n correspond au nombre d'occurrence du motif pris entre parenthèse, ce nombre allant de 1 à 15.

8. Utilisation selon l'une quelconque des revendications précédentes, dans laquelle le au moins un agent de réticulation est présente à hauteur de 1 à 5% en volume par rapport au volume total de la solution.

9. Utilisation selon l'une quelconque des revendications précédentes, dans laquelle le au moins un amorceur de photopolymérisation est un amorceur de la famille des cétones aromatiques.

10. Utilisation selon l'une quelconque des revendications précédentes, dans laquelle le au moins un amorceur de photopolymérisation est présent à hauteur de 1 à 15 g/L.

11. Utilisation selon l'une quelconque des revendications précédentes, dans laquelle le au moins un agent est présent à hauteur de 1 à 15 g/L.

12. Utilisation selon l'une quelconque des revendications précédentes, dans laquelle l'agent est du fluorure de potassium.

13. Utilisation selon l'une quelconque des revendications précédentes, dans laquelle l'agent toxique chimique est un composé organophosphoré.

14. Procédé de piégeage d'un agent toxique chimique présent sur une surface contaminée par ledit agent toxique chimique comprenant les étapes suivantes :
- une étape de mise en contact de la solution telle que définie selon l'une quelconque des revendications 1 à 12 avec la surface contaminée ;
- une étape de formation d'un matériau polymérique tel que défini à la revendication 1 par polymérisation du ou des monomères et du ou des agents de réticulation présents dans la solution ;
- une étape de retrait du matériau polymérique ainsi formée de ladite surface, moyennant quoi ladite surface est ainsi appauvrie voire dénuée en ledit agent toxique chimique.

15. Solution utilisable pour le piégeage d'au moins un agent toxique chimique, ladite solution comprenant au moins un solvant protique, au moins un monomère comprenant un groupe (alkyl)acrylique, (alkyl)acrylate ou (alkyl)acrylamide, au moins un agent de réticulation comprenant au moins deux groupes choisis parmi les groupes(alkyl)acrylique, (alkyl)acrylate ou (alkyl)acrylamide, au moins un amorceur de photopolymérisation et au moins un agent choisi parmi les halogénures alcalins à l'exclusion du chlorure de sodium, les phosphates alcalins, les sulfates alcalins et les mélanges de ceux-ci.

## Patentansprüche

1. Verwendung:
- einer Lösung, umfassend mindestens ein protisches Lösungsmittel, mindestens ein Monomer, das eine (alkyl)Akryl-, (alkyl)Acrylat- oder (alkyl)Acrylamidgruppe umfasst, mindestens ein Vernetzungsmittel, das mindestens zwei Gruppen umfasst, die ausgewählt sind aus (alkyl)Akryl-, (alkyl)Acrylat- oder (alkyl)Acrylamidgruppen, mindestens einen Photopolymerisationsinitiator und mindestens ein Mittel, das ausgewählt ist aus Alkalihalogeniden, Alkaliphosphaten, Alkalisulfaten und Gemischen davon; oder
- eines polymeren Materials, das durch Polymerisation der oben definierten Lösung erhalten werden kann, wobei das Material ein Polymer umfasst, das aus der Polymerisation des oder der Monomere und des oder der Vernetzungsmittel wie oben definiert hervorgegangen ist und in seinem Inneren eine flüssige Phase einschließt, die mindestens ein Mittel wie oben definiert umfasst;
zum Einschließen von mindestens einem chemischen Giftstoff.

2. Verwendung nach Anspruch 1, wobei es sich bei dem protischen Lösungsmittel um Wasser handelt.

3. Verwendung nach Anspruch 1 oder 2, wobei das protische Lösungsmittel bezogen auf das Gesamtvolumen der Lösung in einer Menge von 40 bis 60 Vol.-% vorhanden ist.

4. Verwendung nach einem der vorhergehenden Ansprüche, wobei das mindestens ein Monomer, das eine (alkyl)Acryl-, (alkyl)Acrylat- oder (alkyl)Acrylamidgruppe umfasst, der folgenden Formel (I) entspricht: 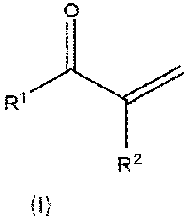 wobei:
- R¹ -OR' darstellt, wobei R' ein Wasserstoffatom oder ein Alkalielement darstellt; -OR³, wobei R³ eine Alkylgruppe darstellt; oder -NR⁴R⁵, wobei R⁴ und R⁵ unabhängig voneinander ein Wasserstoffatom oder eine Alkylgruppe darstellen;
- R² ein Wasserstoffatom oder eine Alkylgruppe darstellt.

5. Verwendung nach einem der vorhergehenden Ansprüche, wobei es sich bei dem mindestens einen Monomer um ein Monomer mit der folgenden Formel (II) handelt: 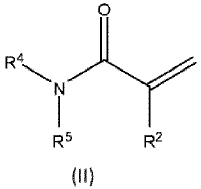 wobei:
- R⁴ und R⁵ so sind wie in Anspruch 4 definiert;
- R² so ist wie in Anspruch 4 definiert.

6. Verwendung nach einem der vorhergehenden Ansprüche, wobei das mindestens ein Vernetzungsmittel mindestens zwei (alkyl)Acrylatgruppen umfasst.

7. Verwendung nach einem der vorhergehenden Ansprüche, wobei das mindestens eine Vernetzungsmittel der folgenden Formel (III) entspricht: 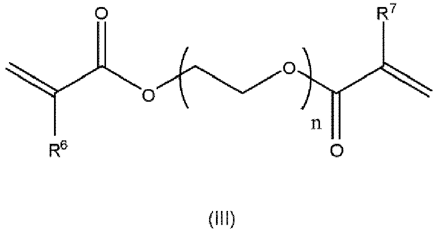 wobei:
- R⁶ und R⁷ unabhängig voneinander ein Wasserstoffatom oder eine Alkylgruppe darstellen;
- n der Anzahl des Auftretens der in Klammern gesetzten Einheit entspricht, wobei diese Zahl von 1 bis 15 reicht.

8. Verwendung nach einem der vorhergehenden Ansprüche, wobei das mindestens ein Vernetzungsmittel bezogen auf das Gesamtvolumen der Lösung in einer Menge von 1 bis 5 Vol.-% vorhanden ist.

9. Verwendung nach einem der vorhergehenden Ansprüche, wobei es sich bei dem mindestens einen Photopolymerisationsinitiator um einen Initiator aus der Familie der aromatischen Ketone handelt.

10. Verwendung nach einem der vorhergehenden Ansprüche, wobei der mindestens eine Photopolymerisationsinitiator in einer Menge von 1 bis 15 g/l vorhanden ist.

11. Verwendung nach einem der vorhergehenden Ansprüche, wobei der mindestens eine Wirkstoff in einer Menge von 1 bis 15 g/l vorhanden ist.

12. Verwendung nach einem der vorhergehenden Ansprüche, wobei es sich bei dem Mittel um Kaliumfluorid handelt.

13. Verwendung nach einem der vorhergehenden Ansprüche, wobei es sich bei dem chemischen Giftstoff um eine phosphororganische Verbindung handelt.

14. Verfahren zum Einschließen eines chemischen Giftstoffs, der auf einer mit dem chemischen Giftstoff kontaminierten Oberfläche vorhanden ist, umfassend die folgenden Schritte:
- einen Schritt des Inkontaktbringens der Lösung, wie sie nach einem der Ansprüche 1 bis 12 definiert ist, mit der kontaminierten Oberfläche;
- einen Schritt der Bildung eines polymeren Materials, wie in Anspruch 1 definiert, durch Polymerisation des oder der Monomere und des oder der in der Lösung vorhandenen Vernetzungsmittel;
- einen Schritt des Entfernens des so gebildeten polymeren Materials von der Oberfläche, wodurch die Oberfläche an dem chemischen Giftstoff verarmt oder sogar von ihm befreit wird.

15. Lösung, die zum Einfangen von mindestens einem chemischen Giftstoff verwendbar ist, wobei die Lösung mindestens ein protisches Lösungsmittel, mindestens ein Monomer, das eine (alkyl)Akryl-, (alkyl)Acrylat- oder (alkyl)Acrylamidgruppe umfasst, mindestens ein Vernetzungsmittel, das mindestens zwei Gruppen umfasst, die ausgewählt sind aus (alkyl)Akryl-, (Alkyl)acrylat- oder (alkyl)Acrylamidgruppen, und mindestens ein Vernetzungsmittel, das mindestens zwei Gruppen umfasst, die ausgewählt sind aus (alkyl)Akryl-, (alkyl)Acrylat- oder (alkyl)Acrylamidgruppen, mindestens einen Photopolymerisationsinitiator und mindestens ein Mittel, das ausgewählt ist aus Alkalihalogeniden mit Ausnahme von Natriumchlorid, Alkaliphosphaten, Alkalisulfaten und Gemischen davon.

## Claims

1. Use:
- of a solution comprising at least one protic solvent, at least one monomer comprising an (alkyl)acrylic group, an (alkyl)acrylate group or an (alkyl)acrylamide group, at least one crosslinking agent comprising at least two groups chosen from (alkyl)acrylic, (alkyl)acrylate or (alkyl)acrylamide groups, at least one photopolymerization initiator and at least one agent selected from among alkali halides, alkali phosphates, alkali sulphates and mixtures thereof; or
- of a polymeric material capable of being obtained by polymerization of the solution defined above, said material comprising a polymer resulting from the polymerization of the monomer(s) and of the crosslinking agent(s) as defined above and trapping, within itself, a liquid phase comprising at least one agent as defined above;
for trapping at least one toxic chemical agent.

2. Use according to claim 1, wherein the protic solvent is water.

3. Use according to claim 1 or 2, wherein the protic solvent is present in an amount of 40 to 60% by volume relative to the total volume of the solution.

4. Use according to any one of the preceding claims, wherein the at least one monomer comprising an (alkyl)acrylic group, an (alkyl)acrylate group, or an (alkyl)acrylamide group corresponds to the following formula (I): 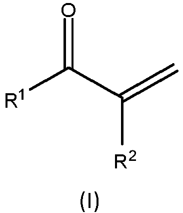 in which:
- R¹ represents -OR' with R' representing a hydrogen atom or an alkali element;
- OR³ with R³ representing an alkyl group; or -NR⁴R⁵ with R⁴ and R⁵ representing, independently of each other, a hydrogen atom or an alkyl group;
- R² represents a hydrogen atom or an alkyl group.

5. Use according to any one of the preceding claims, in which the at least one monomer is a monomer corresponding to the following formula (II): 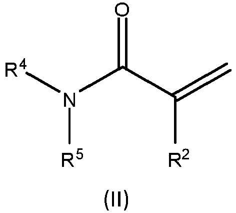 in which:
- R⁴ and R⁵ are as defined in claim 4;
- R² is as defined in claim 4.

6. Use according to any preceding claim, wherein the at least one crosslinking agent comprises at least two (alkyl)acrylate groups.

7. Use according to any one of the preceding claims, in which the at least one crosslinking agent corresponds to the following formula (III): 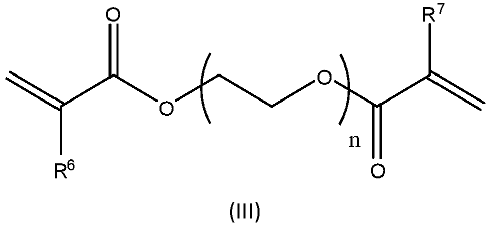 in which:
- R⁶ and R⁷ represent, independently of each other, a hydrogen atom or an alkyl group;
- n corresponds to the unit count in parentheses, this number ranging from 1 to 15.

8. Use according to any one of the preceding claims, wherein the at least one crosslinking agent is present in an amount of 1 to 5% by volume relative to the total volume of the solution.

9. Use according to any one of the preceding claims, in which the at least one photopolymerization initiator is an initiator of the aromatic ketone family.

10. Use according to any one of the preceding claims, in which the at least one photopolymerization initiator is present in an amount of 1 to 15 g/L.

11. Use according to any one of the preceding claims, in which the at least one agent is present in an amount of 1 to 15 g/L.

12. Use according to any preceding claim, wherein the agent is potassium fluoride.

13. Use according to any preceding claim, wherein the chemical toxicant is an organophosphorus compound.

14. A method of trapping a chemical toxic agent present on a surface contaminated by said chemical toxic agent comprising the following steps:
- a step of bringing the solution as defined according to any one of claims 1 to 12 into contact with the contaminated surface;
- a step of forming a polymeric material as defined in claim 1 by polymerizing the monomer(s) and the crosslinking agent(s) present in the solution;
- a step of removing the polymeric material thus formed from said surface, by means of which said surface is thus depleted or even devoid of said chemical toxic agent.

15. Solution which may be used for trapping at least one toxic chemical agent, said solution comprising at least one protic solvent, at least one monomer comprising an (alkyl)acrylic, (alkyl)acrylate or (alkyl)acrylamide group, at least one crosslinking agent comprising at least two groups chosen from among (alkyl)acrylic, (alkyl)acrylate or (alkyl)acrylamide groups, at least one photopolymerization initiator, and at least one agent chosen from among alkali halides with the exclusion of sodium chloride, alkali phosphates, alkali sulphates, and mixtures thereof.
